(19) Europäisches Patentamt
European Patent Office
Office européen des brevets

(11) Numéro de publication: **0 049 699**
**A1**

(12) # DEMANDE DE BREVET EUROPEEN

(21) Numéro de dépôt: **81870039.5**

(22) Date de dépôt: **02.10.81**

(51) Int. Cl.³: **C 07 D 211/90**
C 08 K 5/34, C 08 L 27/04

(30) Priorité: **03.10.80 FR 8021243**

(43) Date de publication de la demande:
**14.04.82 Bulletin 82/15**

(84) Etats contractants désignés:
**BE CH DE FR GB LI NL SE**

(71) Demandeur: **SANOFI, société anonyme**
**40, Avenue George V**
**F-75008 Paris(FR)**

(72) Inventeur: **de Cointet de Fillain, Paul**
**Rue Charles Nodier 9**
**F-31500 Toulouse(FR)**

(72) Inventeur: **Pigerol, Charles**
**Rue Carnot 8**
**F-93400 Saint-Ouen(FR)**

(74) Mandataire: **Cauchie, Daniel**
**c/o S.A. LABAZ N.V. Avenue De Béjar, 1**
**B-1120 Bruxelles(BE)**

(54) **Nouvelles associations de dérivés bêta-aminocrotoniques et de dihydropyridines utiles pour la stabilisation des résines vinyliques.**

(57) L'invention se rapporte à une association de dérivés de dihydropyridine et d'acide β-aminocrotonique destinée à la stabilisation des résines vinyliques.

L'association d'un dérivé de dihydropyridine et d'un dérivé β-aminocrotonique donne lieu à un effet de synergie des pouvoirs stabilisants de chacun de ces produits.

EP 0 049 699 A1

Croydon Printing Company Ltd.

NOUVELLES ASSOCIATIONS DE DERIVES β-AMINOCROTONIQUES ET DE DIHYDROPYRIDINES UTILES POUR LA STABILISATION DES RESINES VINYLIQUES

La présente invention est relative à la stabilisation des résines vinyliques vis-à-vis des divers agents de dégradation physiques et physico-chimiques.

Par"résine vinylique", il est entendu que l'on désigne ici aussi bien les homopolymères des dérivés du type chlorure de vinyle, acétate de vinyle, chlorure de vinylidène et analogues, que les copolymères de ces divers monomères, en toutes proportions relatives, dans toutes leurs applications.

On sait que les résines vinyliques ont tendance à se dégrader à la chaleur et qu'il est indispensable d'introduire dans ces masses de matière synthétique des agents stabilisants, en vue d'en retarder la dégradation thermique, et donc la coloration.

On sait également que les résines vinyliques peuvent se dégrader sous l'influence de la lumière solaire et qu'une modification de la coloration originale de la résine peut en résulter. Ce problème est particulièrement crucial dans le cas des emballages alimentaires car l'on conçoit que l'on ne pourrait commercialiser des aliments dans un emballage dont la coloration varie au cours du temps.

Enfin, il est également connu que les résines vinyliques subissent une dégradation sous l'action des conditions oxydantes dans lesquelles elles peuvent se trouver, et notamment, de l'oxygène de l'atmosphère.

C'est pourquoi on recherche depuis longtemps des agents, susceptibles de s' opposer efficacement à ces diverses actions de dégradation, et de préférence efficaces à la fois vis-à-vis de toutes ces actions.

Parmi ces agents, on peut citer en premier lieu les phénols, généralement

utilisés comme anti-oxydants dans ces résines, tels que, par exemple, le di-tertio-butyl-2,6 méthyl-4 phénol.

Plus récemment, on a proposé au même usage des dérivés de dihydropyridines, pouvant être représentés par la formule générale I ci-après :

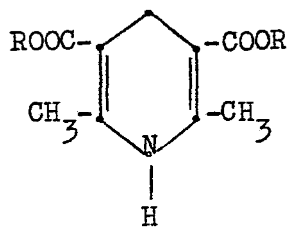

I

dans laquelle R représente un radical alkyle linéaire contenant de 1 à 22 atomes de carbone, un radical alkényle linéaire contenant de 3 à 18 atomes de carbone, un radical alkynyle linéaire contenant de 3 à 11 atomes de carbone ou un radical aralkyle, éventuellement substitué en position ortho ou para par un atome d'halogène ou par un radical méthyle ou méthoxy ou R représente un radical phényle, éventuellement substitué en position para par un radical méthoxy ou représente un radical $R_1-O-(CH_2)_n-$ dans lequel n prend la valeur 2, 3 ou 4 et $R_1$ représente un radical alkyle linéaire contenant de 1 à 4 atomes de carbone ou un radical phényle.

Les composés de formule I ont été décrits dans les brevets français n° 2.239.496, 2.405.937, 2.405.974, 2.407.236 et 2.439.215 et peuvent être préparés par les méthodes décrites dans lesdits brevets. Ils sont utilisés comme stabilisants thermiques des résines vinyliques à raison, d'après le brevet français n° 2.239.496 de 0,2 à 1,5% en poids par rapport à la résine.

On connaît également, pour la même application, les β-aminocrotonates de formules générales II ou III:

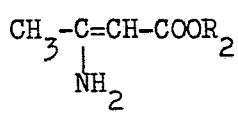

II

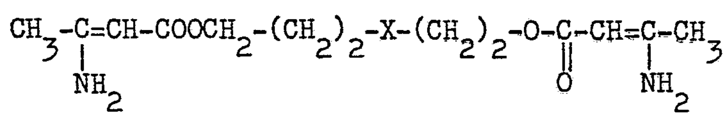

III

dans lesquelles :

$R_2$ représente un radical alkyle linéaire comprenant de 1 à 8 atomes de carbone <u>ou</u>

un mélange de radicaux alkyles linéaires contenant de 16 à 18 atomes de carbone et X représente un atome de soufre ou d'oxygène ou une simple liaison. $R_2$ peut représenter en particulier un radical méthyle, éthyle ou octyle.

Les β-aminocrotonates II et III sont des stabilisants thermiques organiques bien connus des résines vinyliques.

Ainsi, ces agents sont décrits, avec cette application, dans l'ouvrage de René LEFAUX : "Les Matières Plastiques dans l'Industrie Alimentaire" (C.F.E., 1972, p. 230-232 et 527). Il sont usuellement introduits dans les masses à stabiliser dans une proportion d'ordre de 0,5 à 1,5% en poids.

Parmi ces aminocrotonates, on utilise en particulier comme stabilisants thermiques :

- le β-aminocrotonate de butane-diol,
- le β-aminocrotonate de thiodiglycol,
- le β-aminocrotonate d'un mélange d'alcools en $C_{16}$ - $C_{18}$,
- le β-aminocrotonate de méthyle.

Or, il est également bien connu que ces divers agents stabilisants, notamment, dans leur application dans l'Industrie Alimentaire, présentent l'inconvénient de donner lieu à divers phénomènes gênants, tels que migration vers les aliments, sublimation, phosphorescence, qui sont d'autant plus marqués que leur proportion est plus élevée. Ainsi, ce problème a été évoqué dans le brevet français n° 2.405.974.

De même, dans le cas de l'application de ces stabilisants aux copolymères vinyliques, utilisés par exemple dans la fabrication de disques, la réduction de leur proportion est recherchée dans la mesure où cela améliorerait la qualité auditive.

Il est évident que la réduction de la proportion de stabilisant est aussi recherchée dans toutes les applications car elle permet la diminution du coût de la stabilisation.

L'invention repose sur la découverte que l'association d'une dihydropyridine

du type I avec un dérivé β-aminocrotonique du type II ou III donne lieu à un effet de synergie des pouvoirs stabilisants de chacun de ces produits, permettant ainsi, aussi bien d'utiliser, pour un pouvoir stabilisant équivalent, des quantités bien plus faibles des deux produits, que d'obtenir un pouvoir stabilisant bien supérieur avec les quantités usuelles de ces produits.

Cette possibilité d'utiliser des taux inférieurs de stabilisant est particulièrement intéressante dans le cas des résines destinées à la fabrication d'emballages alimentaires. Il y a, en effet, intérêt de réduire les taux de stabilisants dans le chlorure de polyvinyle à usage alimentaire, pour réduire au maximum la migration dans les aliments et, par suite, les problèmes de toxicité.

Un autre avantage procuré par les associations de l'invention réside dans la stabilisation des copolymères vinyliques, destinés à la fabrication des disques, dont la qualité auditive est améliorée lors de la mise en oeuvre de faibles quantités de stabilisants, tout en réduisant le coût de la stabilisation.

Un autre avantage encore que les associations de l'invention apportent aux formulations de copolymères vinyliques réside dans la constatation qu'elles ne modifient pas la durée du temps de collage lors de leur mise en oeuvre. Cette propriété est importante car elle permet le passage du compound PVC sur les machines industrielles pour la phase d'extrusion-soufflage. Par ailleurs, au surplus, elle peut permettre parfois d'abaisser les taux des lubrifiants internes et externes dans les formules correspondantes.

En ce qui concerne les applications alimentaires des compositions de résines vinyliques stabilisées selon l'invention, on sait d'après les brevets français mentionnés ci-dessus, que les composés de formule I ont une faible toxicité aiguë, la $DL_{50}$ dépassant 2 g/kg par voie orale chez la souris. De même, les β-aminocrotonates sont des composés dépourvus de toute toxicité: ils ont la qualité de stabilisants alimentaires. A titre d'exemple, la $DL_{50}$ chez le rat du β-aminocrotonate de butanediol est supérieure à 4 g/kg et celle du β-aminocrotonate de thiodiglycol supérieur à 7,24 g/kg.

Il apparaît donc que les associations de l'invention ne poseront pas de

problème de toxicité et que leur utilisation pour la stabilisation des emballages alimentaires peut être envisagée, la migration étant d'autant plus faible que les quantités de stabilisants à mettre en oeuvre sont faibles, ce qui représente un des avantages importants de l'invention.

On rappellera d'ailleurs que les β-aminocrotonates sont insolubles dans l'eau et sont agréés, tant en France que dans la C.E.E., comme stabilisants alimentaires depuis plusieurs années.

L'étude expérimentale des associations selon l'invention a permis de montrer que :

1. Les constituants de ces associations sont compatibles entre eux et avec les résines vinyliques (homo- et copolymères).

2. Les associations stabilisent à la chaleur le chlorure de polyvinyle et ses copolymères et permettent de réduire les quantités de stabilisant β-aminocrotonique.

Il est très avantageux de pouvoir abaisser par l'emploi des associations de l'invention la quantité de stabilisant β-aminocrotonique dans les formules destinées à l'emballage des aliments, car ce type de stabilisant confère souvent un goût ammoniacal aux aliments, lorsqu'il est utilisé en quantité nécessaire à la stabilisation.

3. Les associations stabilisent à la lumière le chlorure de polyvinyle et ses copolymères.

4. Les composés de formule I et les composés β-aminocrotoniques manifestent, lorsqu'ils sont associés, une synergie de leurs propriétés stabilisantes thermiques.

L'invention vise donc :

- En premier lieu une nouvelle association stabilisante pour résines vinyliques constituées de polymères ou copolymères vinyliques en vue de les stabiliser vis-à-vis des actions dégradantes de la chaleur, de la lumière et des agents chimiques oxydants, cette association étant constituée d'un dérivé de dihydropyridine de formule I et d'un β-aminocrotonate de formule II ou III.

- En deuxième lieu, une résine vinylique stabilisée par l'introduction dans cette résine d'un dérivé de dihydropyridine de formule I dans la proportion de 0,01 à 0,5 et de préférence 0,01 à 0,3 partie en poids par 100

parties de résine et d'un dérivé β-aminocrotonique de formule II ou III dans la proportion de 0,1 à 1,0 et de préférence 0,1 à 0,5 partie en poids par 100 parties de résine.

- En troisième lieu, un procédé pour la stabilisation de résines vinyliques contre l'action dégradante de la chaleur, de la lumière et des agents oxydants chimiques, ce procédé consistant à introduire dans cette résine une association telle que définie ci-dessus.

- En quatrième lieu, les applications de ces résines vinyliques stabilisées à la fabrication d'articles commerciaux et industriels, notamment, mais non limitativement, destinés à l'Industrie Alimentaire.

Le phénomène de synergie résultant de la mise en oeuvre des associations stabilisantes selon l'invention peut, comme il a été indiqué plus haut, prendre plusieurs aspects.

Ainsi notamment dans l'Industrie Alimentaire, il peut être avantageux de diminuer les proportions d'agents stabilisants pour obtenir les effets stabilisants nécessaires et suffisants déjà connus, mais sans les inconvénients qui résultaient antérieurement des proportions plus élevées de ces agents.

De même, on peut souhaiter diminuer la proportion de l'un seulement des agents utilisés, en tirant partie de l'action de synergie résultant de la présence d'une petite proportion de l'autre agent.

On peut également rechercher une action stabilisante différente, par exemple en précocité, en durée, et/ou vis-à-vis d'un degré d'agressivité plus important des conditions provoquant la dégradation, par exemple, vis-à-vis d'une température plus élevée ou d'une atmosphère plus corrosive.

Il est donc possible de moduler l'application de l'invention en fonction des objectifs à atteindre, en faisant varier, non seulement la nature de chacun des composants de l'association, mais aussi ses proportions relatives, ces facteurs dépendant eux-mêmes aussi de la nature de la masse de résine traitée.

Les études expérimentales ci-après font ressortir ce large éventail de possibilités. Bien entendu, les compositions stabilisantes selon l'invention sont incorporées à la masse de résines par des moyens connus.

Pour la facilité de présentation des résultats, on a désigné comme suit les composés formant les associations selon l'invention :

Composés de formule I

| | |
|---|---|
| Diméthyl-2,6 dicarbooctyloxy-3,5 dihydro-1,4 pyridine | L 28502 |
| Diméthyl-2,6 dicarbomethoxy-3,5 dihydro-1,4 pyridine | L 28504 |
| Diméthyl-2,6 dicarbododécyloxy-3,5 dihydro-1,4 pyridine | L 28507 |
| Diméthyl-2,6 dicarbopropyloxy-3,5 dihydro-1,4 pyridine | L 28509 |
| Diméthyl-2,6 dicarboallyloxy-3,5 dihydro-1,4 pyridine | L 28511 |
| Diméthyl-2,6 dicarbobenzyloxy-3,5 dihydro-1,4 pyridine | L 28512 |
| Diméthyl-2,6 dicarbopropargyloxy-3,5 dihydro-1,4 pyridine | L 28513 |
| Diméthyl-2,6 dicarbo (méthoxy-4' phényloxy)-3,5 dihydro-1,4 pyridine | L 28541 |
| Diméthyl-2,6 dicarbo (phénoxy-2' éthoxy)-3,5 dihydro-1,4 pyridine | L 28588 |
| Diméthyl-2,6 dicarbotétradécyloxy-3,5 dihydro-1,4 pyridine | L 28590 |
| Diméthyl-2,6 dicarbodécyloxy-3,5 dihydro-1,4 pyridine | L 28591 |
| Diméthyl-2,6 dicarbotridécyloxy-3,5 dihydro-1,4 pyridine | L 28596 |
| Diméthyl-2,6 dicarbooctadécyloxy-3,5 dihydro-1,4 pyridine | L 28599 |
| Diméthyl-2,6 dicarbobéhényloxy-3,5 dihydro-1,4 pyridine | L 28601 |
| Diméthyl-2,6 dicarbopalmityloxy-3,5 dihydro-1,4 pyridine | L 28603 |

Un composé de formule I dans laquelle R représente le radical alkylique du DOBANOL 23 (mélange d'alcools primaires contenant de 12 à 15 atomes de carbone et commercialisé par SHELL-CHIMIE) est représenté par le code L 28597 tandis que le code L 28604 correspond à un composé de formule I dans laquelle R représente le radical alkylique de l'ALFOL 10-14 (mélange d'alcools primaires contenant de 10 à 14 atomes de carbone et commercialisé par CONDEA-CHIMIE).

Dérivés de β-aminocrotonate

| | |
|---|---|
| - β-Aminocrotonate de butanediol | 4 |
| - β-Aminocrotonate de thiodiglycol | 5 |
| - β-Aminocrotonate d'un mélange d'alcools contenant de 16 à 18 atomes de carbone | 6 |

- β-Aminocrotonate de méthyle 7

A. Etude de la compatibilité des composés de formule I et des β-aminocrotonates

On a tout d'abord vérifié la parfaite compatibilité des dihydropyridines de formule I et des β-aminocrotonates dans les résines vinyliques.

Pour cela, on a montré que l'incorporation dans une résine vinylique d'un stabilisant de formule I et d'un stabilisant aminocrotonique augmentait la stabilité de ladite résine.

Etude de la stabilité thermique statique

a) Stabilisation du chlorure de polyvinyle

L'étude de la stabilisation thermique de la résine ci-dessous a été réalisée selon la méthode décrite dans le brevet français n° 2.273.841.

La résine testée a subi un calandrage dans un mélangeur à cylindres chauffants portés à une température de 160°C et les feuilles rigides obtenues sont alors soumises à des séjours en étuve, à la température de 210°C, jusqu'à début de carbonisation.

On utilise pour ce traitement une étuve ventilée et thermostatisée.

On compare alors l'évolution de la coloration d'une feuille contenant le stabilisant à tester à celle d'une feuille obtenue dans les mêmes conditions mais sans stabilisant, les colorations étant évaluées selon l'échelle de GARDNER.

On a utilisé la résine suivante :

| Ingrédients | Parties en poids |
|---|---|
| Chlorure de polyvinyle (SOLVIC 258 RD de SOLVAY) | 100 |
| Résine acrylique | 8 |
| Huile de soja époxydée | 4 |
| Stéarate de calcium | 0,2 |
| Huile de ricin hydrogénée | 1,2 |
| Trimontanate de glycéryle | 0,4 |
| Stabilisant(s) | 0,3 |

Les bandes de stabilité ont été maintenues en étuve pendant 0, 3, 6, 9, 12, 15, 18 et 21 minutes et on a obtenu les résultats suivants :

TABLEAU 1

| Stabilisant | | | | Temps en minutes | | | | | | | |
|---|---|---|---|---|---|---|---|---|---|---|---|
| N°code | Conc. | N° | Conc. | 0 | 3 | 6 | 9 | 12 | 15 | 18 | 21 |
| - | - | 4 | 0,3 | 1 | 1 | < 2 | 8 | 14 | 17 | - | - |
| L 28504 | 0,2 | 4 | 0,1 | 1 | 1 | >2 | 6 | 9 | 13 | - | - |
| L 28507 | 0,2 | 4 | 0,1 | 1 | 1 | < 3 | 8,5 | 13 | 16 | - | - |
| L 28511 | 0,2 | 4 | 0,1 | 1 | 1 | >2 | 6 | 8,5 | ∠11 | - | - |
| L 28512 | 0,2 | 4 | 0,1 | 1 | 1 | >2 | 7 | >8 | >11 | - | - |
| L 28597 | 0,2 | 4 | 0,1 | 1 | 1 | <3 | >7 | <11 | >18 | - | - |
| - | - | 6 | 0,3 | 1 | >1 | 3 | 10,5 | 14 | 17 | - | - |
| L 28504 | 0,2 | 6 | 0,1 | 1 | >1 | 3 | 6 | 9 | 11 | - | - |
| L 28507 | 0,2 | 6 | 0,1 | 1 | >1 | >3 | 10,5 | 11 | 15 | - | - |
| L 28511 | 0,2 | 6 | 0,1 | 1 | >1 | >2 | 6 | 7 | 10,5 | - | - |
| L 28512 | 0,2 | 6 | 0,1 | 1 | >1 | >2 | 7 | 10 | 11 | - | - |
| L 28597 | 0,2 | 6 | 0,1 | 1 | >1 | 3 | 8,5 | 11 | 13 | - | - |
| - | - | 5 | 0,3 | 1 | 1 | >1 | 3 | 5 | <12 | 15 | 18 |
| L 28504 | 0,2 | 5 | 0,1 | 1 | 1 | >1 | 3 | 4 | 6 | 10,5 | 16 |
| L 28507 | 0,2 | 5 | 0,1 | 1 | 1 | >1 | 3 | >4 | 11 | 16 | 18 |
| L 28511 | 0,2 | 5 | 0,1 | 1 | 1 | >1 | >2 | >3 | 6 | 10 | 14 |
| L 28512 | 0,2 | 5 | 0,1 | 1 | 1 | >1 | <3 | 4 | 9,5 | 11 | 14 |
| L 28597 | 0,2 | 5 | 0,1 | 1 | 1 | >1 | 4 | 7 | 11 | 14 | 17 |
| - | - | 7 | 0,3 | 1 | 1 | 4 | >11 | 15 | >18 | - | - |
| L 28504 | 0,2 | 7 | 0,1 | 1 | 1 | 3 | 8 | 10,5 | 16 | - | - |
| L 28507 | 0,2 | 7 | 0,1 | 1 | 1 | 4 | 9 | 11 | brûlé | - | - |
| L 28511 | 0,2 | 7 | 0,1 | 1 | 1 | >2 | 7,5 | 10 | 16 | - | - |
| L 28512 | 0,2 | 7 | 0,1 | 1 | 1 | 4 | 8 | 11 | 17 | - | - |
| L 28597 | 0,2 | 7 | 0,1 | 1 | 1 | >4 | 10,5 | 14 | >18 | - | - |

| | | | | | | | | | | | |
|---|---|---|---|---|---|---|---|---|---|---|---|
| - | - | 4 | 0,3 | 1 | 1 | 4 | 11 | < 13 | 17 | - | - |
| L 28509 | 0,2 | 4 | 0,1 | 1 | < 2 | < 2 | < 8 | 9 | < 11 | 17 | - |
| L 28513 | 0,2 | 4 | 0,1 | 1 | < 2 | 4 | 8 | 9,5 | 14 | 16 | - |
| L 28588 | 0,2 | 4 | 0,1 | 1 | < 2 | > 3 | 9,5 | 10,5 | 15 | brûlé | - |
| L 28604 | 0,2 | 4 | 0,1 | 1 | 1 | < 3 | 6 | 8,5 | 11 | 14 | - |
| | | | | | | | | | | | |
| - | - | 6 | 0,3 | 1 | < 2 | 10 | 14 | 16 | - | - | - |
| L 28588 | 0,2 | 6 | 0,1 | 1 | < 2 | 4 | 9 | > 11 | - | - | - |
| L 28599 | 0,2 | 6 | 0,1 | 1 | 2 | 8,5 | 11 | 14 | - | - | - |
| | | | | | | | | | | | |
| - | - | 5 | 0,3 | 1 | 1 | 1 | 1 | 5 | 11 | - | - |
| L 28588 | 0,2 | 5 | 0,1 | 1 | 1 | 1 | 2 | 5 | 10,5 | - | - |
| L 28599 | 0,2 | 5 | 0,1 | 1 | 1 | 1 | 2 | 5 | < 11 | - | - |
| | | | | | | | | | | | |
| - | - | 4 | 0,3 | 1 | 1 | > 1 | < 2 | > 4 | 14 | - | - |
| L 28590 | 0,2 | 4 | 0,1 | 1 | 1 | > 1 | < 2 | 4 | 11 | - | - |
| L 28601 | 0,2 | 4 | 0,1 | 1 | 1 | < 2 | > 2 | 4 | < 12 | - | - |
| L 28603 | 0,2 | 4 | 0,1 | 1 | 1 | < 2 | 3 | 4 | > 11 | - | - |

Tous les résultats montrent la supériorité des associations selon l'invention sur les β-aminocrotonates utilisés seuls, et montrent donc la parfaite compatibilité des dihydropyridines de formule I et des β-aminocrotonates dans les résines vinyliques.

b) <u>Stabilisation des copolymères chlorure de vinyle-acétate de vinyle</u>

| Ingrédients | Parties en poids |
|---|---|
| Chlorure de vinyle-Acétate de vinyle (LUCOVYL MA 6035 de RHONE-POULENC) | 65 |
| Chlorure de vinyle-Acétate de vinyle (LUCOVYL GA 8502 de RHONE-POULENC) | 25 |
| Chlorure de polyvinyle (LUCOVYL MB 1000 de RHONE-POULENC) | 10 |
| Stéarate de calcium | 0,3 |
| Stabilisant(s) | 0,5 |

Les bandes de stabilité sont maintenues dans une étuve ventilée à 185°C pendant 0, 2, 4, 6, 8, 10, 12, 14 et 16 minutes et leur coloration a été chiffrée selon l'échelle GARDNER.

On a obtenu les résultats suivants :

TABLEAU 2

| Stabilisant | | | | Temps en minutes | | | | | | | | |
|---|---|---|---|---|---|---|---|---|---|---|---|---|
| N°code | Conc. | N° | Conc. | 0 | 2 | 4 | 6 | 8 | 10 | 12 | 14 | 16 |
| - | - | 4 | 0,5 | 1 | 1 | >2 | 8 | 10 | 17 | 17 | brûlé | - |
| L 28504 | 0,5 | - | - | >2 | >2 | 3 | 7 | >11 | <13 | >18 | brûlé | - |
| L 28504 | 0,2 | 4 | 0,3 | 2 | 2 | >2 | >4 | <7 | <11 | >11 | >18 | |
| L 28507 | 0,5 | - | - | 2 | 2 | >2 | 5 | 12 | >18 | >18 | brûlé | - |
| L 28507 | 0,2 | 4 | 0,3 | 2 | 2 | 2 | >3 | <7 | <11 | 13 | >18 | - |
| - | - | 4 | 0,5 | 1 | 1 | >2 | 3 | 8 | >18 | >18 | brûlé | - |
| L 28512 | 0,5 | - | - | 2 | 2 | 3 | 5 | >10 | brûlé | - | - | - |
| L 28512 | 0,3 | 4 | 0,2 | 2 | 2 | 2 | <4 | 7 | >11 | 17 | brûlé | - |
| L 28513 | 0,5 | - | - | 2 | 2 | <3 | 4 | <7 | <18 | >18 | brûlé | - |
| L 28513 | 0,2 | 4 | 0,3 | 2 | 2 | 2 | <4 | 7 | >11 | 17 | brûlé | - |
| - | - | 4 | 0,5 | 1 | 1 | >2 | 4 | 6 | 17 | 18 | brûlé | - |
| L 28590 | 0,5 | - | - | >2 | >2 | <3 | >4 | 8 | 18 | >18 | brûlé | - |
| L 28590 | 0,3 | 4 | 0,2 | 1 | 1 | <2 | 3 | 5 | <13 | 18 | brûlé | - |
| L 28591 | 0,5 | - | - | <3 | <3 | 3 | 5 | 8 | 18 | >18 | brûlé | - |
| L 28591 | 0,2 | 4 | 0,3 | 1 | 1 | 2 | 3 | 5 | 13 | 18 | brûlé | - |
| - | - | 4 | 0,5 | >1 | >1 | >2 | 3 | 10 | 17 | >18 | brûlé | - |
| L 28596 | 0,5 | - | - | >1 | >1 | 3 | 4 | <11 | brûlé | - | - | - |
| L 28596 | 0,2 | 4 | 0,3 | >1 | >1 | 2 | 3 | 10 | 13 | >18 | brûlé | - |
| - | - | 6 | 0,5 | 1 | 1 | >1 | 3 | 10 | 17 | >18 | brûlé | - |
| L 28504 | 0,5 | - | - | 2 | 2 | >2 | 3 | 10 | 14 | >18 | brûlé | - |
| L 28504 | 0,3 | 6 | 0,2 | 2 | 2 | >2 | <3 | 5 | >11 | <14 | brûlé | - |
| - | - | 6 | 0,5 | 1 | 1 | >1 | 3 | 10 | 17 | >18 | brûlé | - |
| L 28511 | 0,5 | - | - | 2 | 2 | >2 | 3 | 10 | 14 | >18 | brûlé | - |
| L 28511 | 0,2 | 6 | 0,3 | 2 | 2 | >2 | <3 | 5 | >11 | <14 | brûlé | - |

| | | | | | | | | | | | | |
|---|---|---|---|---|---|---|---|---|---|---|---|---|
| - | - | 5 | 0,5 | 1 | 1 | >2 | 5 | 7 | 11 | 14 | 18 | |
| L 28504 | 0,5 | - | - | 1 | 2 | 3 | 7 | 14 | 18 | 18 | brûlé | - |
| L 28504 | 0,2 | 5 | 0,3 | 1 | 2 | <3 | 4 | >7 | <11 | <11 | 18 | brûlé |
| | | | | | | | | | | | | |
| - | - | 5 | 0,5 | 1 | 1 | 2 | 5 | 11 | 16 | 18 | brûlé | - |
| L 28511 | 0,5 | - | - | >2 | >2 | >2 | 4 | 10 | 13 | brûlé | - | - |
| L 28511 | 0,2 | 5 | 0,3 | >2 | >2 | >2 | 4 | 8 | >10 | 16 | brûlé | - |
| L 28512 | 0,5 | - | - | >2 | >2 | 3 | 7 | 12 | 18 | brûlé | - | - |
| L 28512 | 0,2 | 5 | 0,3 | >2 | >2 | >2 | <4 | 8 | 11 | 18 | brûlé | - |

La supériorité des associations selon l'invention sur les composés de formule I et sur les β-aminocrotonates utilisés seuls est particulièrement nette dans le tableau ci-dessus.

On a effectué les mêmes essais avec la résine suivante :

| Ingrédients | Parties en poids |
|---|---|
| Chlorure de vinyle-Acétate de vinyle (LUCOVYL MA 6035) | 80 |
| Chlorure de polyvinyle (LUCOVYL MB 1000) | 20 |
| Stéarate de calcium | 0,5 |
| Stabilisant(s) | 0,2 à 0,5 |

On a obtenu les résultats suivants :

TABLEAU 3

| Stabilisant | | | | Temps en minutes | | | | | | |
|---|---|---|---|---|---|---|---|---|---|---|
| N°code | Conc. | N° | Conc. | 0 | 2 | 4 | 6 | 8 | 10 | 12 |
| - | - | 4 | 0,5 | 1 | 1 | >2 | >4 | >11 | 12 | 15 |
| L 28504 | 0,15 | 4 | 0,15 | 1 | 1 | 2 | >3 | 4 | >10 | <12 |
| L 28504 | 0,10 | 4 | 0,10 | 1 | 1 | >2 | 4 | 10 | 11 | >13 |
| | | | | | | | | | | |
| - | - | 4 | 0,5 | 1 | 2 | 3 | 8,5 | 12 | 15 | 18 |
| L 28511 | 0,15 | 4 | 0,15 | 1 | 2 | <3 | >5 | 9 | <13 | >16 |
| L 28512 | 0,15 | 4 | 0,15 | 1 | 2 | <3 | >5 | 10 | 13 | 17 |
| L 28588 | 0,15 | 4 | 0,15 | 1 | 2 | <3 | 5 | 10 | >13 | >17 |

| | | | | | | | | | | | |
|---|---|---|---|---|---|---|---|---|---|---|---|
| - | - | 5 | 0,5 | 1 | >1 | 3 | 4 | 10,5 | 12 | 17 | |
| L 28504 | 0,15 | 5 | 0,15 | 1 | >1 | <3 | <4 | 5 | 10 | 13 | |
| L 28511 | 0,15 | 5 | 0,15 | 1 | >1 | 3 | 8 | <10 | >10 | >11 | |
| L 28512 | 0,15 | 5 | 0,15 | 1 | >1 | 3 | 8 | <11 | >11 | >12 | |
| L 28588 | 0,15 | 5 | 0,15 | 1 | >1 | 3 | 8 | <11 | >11 | >12 | |
| | | | | | | | | | | | |
| - | - | 7 | 0,15 | 1 | 1 | 4 | 11 | 13 | 16 | 18 | |
| L 28504 | 0,15 | 7 | 0,15 | 1 | 1 | <3 | <4 | 8 | <11 | 14 | |
| L 28511 | 0,15 | 7 | 0,15 | 1 | 1 | 4 | 6 | >7 | 12 | 14 | |
| L 28512 | 0,15 | 7 | 0,15 | 1 | 1 | <4 | 5 | 7 | 12 | 17 | |
| L 28588 | 0,15 | 7 | 0,15 | 1 | 1 | 4 | <6 | 9 | 12 | 17 | |

On voit, à la lecture des résultats ci-dessus, que 0,3 partie d'un mélange d'un composé de formule I (0,15 partie) et d'un composé aminocrotonique (0,15 partie) possède un pouvoir stabilisant supérieur ou égal à celui obtenu avec 0,5 partie du même β-aminocrotonate. Cela permet de diminuer la quantité de stabilisant dans la résine et l'on a vu plus haut que cette diminution permettait d'améliorer la qualité auditive des disques fabriqués avec des copolymères vinyliques tel celui ci-dessus et également d'en diminuer le prix de revient.

On a également obtenu des résultats comparables avec la résine ci-dessous :

| <u>Ingrédients</u> | <u>Parties en poids</u> |
|---|---|
| Chlorure de vinyle-Acétate de vinyle (LUCOVYL MA 6035) | 80 |
| Chlorure de polyvinyle (RB 8010) | 20 |
| Stéarate de calcium | 0,5 |
| Stabilisant(s) | 0,3 ou 0,5 |

Les résultats obtenus sont repris dans le tableau ci-dessous :

<u>TABLEAU 4</u>

| Stabilisant | | | | Temps en minute | | | | | | | |
|---|---|---|---|---|---|---|---|---|---|---|---|
| N°Code | Conc. | N° | Conc. | 0 | 2 | 4 | 6 | 8 | 10 | 12 | 14 |
| - | - | 4 | 0,5 | 1 | >1 | >2 | 4 | >5 | 10 | 17 | brûlé |
| L 28504 | 0,15 | 4 | 0,15 | 1 | >1 | <2 | 3 | <5 | <9 | 16 | brûlé |
| L 28511 | 0,15 | 4 | 0,15 | 1 | 1 | >2 | >3 | 4 | <9 | 16 | brûlé |

| | | | | | | | | | | | | |
|---|---|---|---|---|---|---|---|---|---|---|---|---|
| - | - | 5 | 0,5 | >1 | >1 | 2 | <3 | 8 | 12 | 14 | 17 |
| L 28504 | 0,15 | 5 | 0,15 | >1 | >1 | <2 | 3 | >4 | 8,5 | 11 | 13 |
| L 28511 | 0,15 | 5 | 0,15 | 1 | 1 | 2 | 4 | <7 | 8,5 | >12 | >15 |
| L 28512 | 0,15 | 5 | 0,15 | 1 | 1 | 2 | 3 | <7 | 10 | >12 | 13 |
| L 28588 | 0,15 | 5 | 0,15 | 1 | 1 | <2 | 3 | 8 | 10,5 | >12 | 15 |
| | | | | | | | | | | | |
| - | - | 5 | 0,5 | >1 | >1 | 2 | <3 | 8 | 12 | 14 | 17 |
| L 28504 | 0,15 | 5 | 0,15 | >1 | >1 | <2 | 3 | >4 | 8,5 | 11 | 13 |
| L 28503 | 0,15 | 5 | 0,15 | 1 | 1 | >2 | 4 | 8 | 11 | <13 | 17 |
| L 28511 | 0,15 | 5 | 0,15 | 1 | 1 | 2 | 4 | <7 | 8,5 | >12 | >15 |
| L 28512 | 0,15 | 5 | 0,15 | 1 | 1 | 2 | 3 | <7 | 10 | >12 | 13 |
| L 28588 | 0,15 | 5 | 0,15 | 1 | 1 | <2 | 3 | 8 | 10,5 | >12 | 15 |

Il apparaît d'après le tableau ci-dessus qu'il suffit d'employer un mélange selon l'invention composé de 0,15 partie de chacun des constituants pour obtenir une stabilisation équivalente à celle produite par 0,5 partie de β-aminocrotonate utilisé seul.

On a enfin réalisé des essais avec la résine ci-dessous :

| Ingrédients | Parties en poids |
|---|---|
| Chlorure de vinyle-Acétate de vinyle (SOLVIC 547 SA de SOLVAY) | 80 |
| Chlorure de polyvinyle (LACQVIL SO71 de ATO-CHIMIE) | 20 |
| Stéarate de calcium | 0,5 |
| Stabilisant(s) | 0,3 ou 0,5 |

On a obtenu les résultats ci-dessous :

TABLEAU 5

| Stabilisant | | | | Temps en minutes | | | | | | | |
|---|---|---|---|---|---|---|---|---|---|---|---|
| N°Code | Conc. | N° | Conc. | 0 | 2 | 4 | 6 | 8 | 10 | 12 | 14 |
| - | - | 4 | 0,5 | 1 | >1 | >2 | 4 | >5 | 10 | 17 | - |
| L 28504 | 0,15 | 4 | 0,15 | 1 | >1 | <2 | 3 | <5 | <9 | 16 | - |
| L 28511 | 0,15 | 4 | 0,15 | 1 | 1 | >2 | >3 | 4 | <9 | 16 | - |
| | | | | | | | | | | | |
| - | - | 5 | 0,5 | >1 | >1 | 2 | <3 | 8 | 12 | 14 | 17 |
| L 28504 | 0,15 | 5 | 0,15 | >1 | >1 | <2 | 3 | >4 | 8,5 | 11 | 13 |
| L 28511 | 0,15 | 5 | 0,15 | 1 | 1 | 2 | 4 | <7 | 8,5 | >12 | >15 |

| | | | | | | | | | | | |
|---|---|---|---|---|---|---|---|---|---|---|---|
| L 28512 | 0,15 | 5 | 0,15 | 1 | 1 | 2 | 3 | < 7 | 10 | > 12 | 13 |
| L 28588 | 0,15 | 5 | 0,15 | 1 | 1 | < 2 | 3 | 8 | 10,5 | > 12 | 15 |
| | | | | | | | | | | | |
| - | - | 7 | 0,5 | > 1 | < 2 | 4 | 10 | 12 | 16 | 18 | - |
| L 28504 | 0,15 | 7 | 0,15 | 1 | 1 | 1 | > 3 | 7,5 | 11 | 15 | - |
| L 28507 | 0,15 | 7 | 0,15 | 1 | 1 | < 2 | 7 | 8,5 | 10 | 16 | - |
| L 28511 | 0,15 | 7 | 0,15 | 1 | 1 | > 2 | < 7 | 8,5 | > 11 | > 15 | - |
| L 28512 | 0,15 | 7 | 0,15 | 1 | 1 | 2 | 7 | 8,5 | 11 | 15 | - |
| L 28588 | 0,15 | 7 | 0,15 | 1 | 1 | 2 | 7 | 8,5 | 11 | 15 | - |

Ces résultats confirment les conclusions tirées des essais précédents.

c) Stabilisation des copolymères chlorure de vinyle-chlorure de vinylidène

Les essais ont été effectués en une étuve ventilée à 210°C avec la résine suivante :

| Ingrédients | Parties en poids |
|---|---|
| Chlorure de vinyle (SOLVIC 258 RD) | 90 |
| Chlorure de vinyle-chlorure de vinylidène (GEON 222) | 10 |
| Résine acrylique | 8 |
| Huile de soja époxydée | 4 |
| Stéarate de calcium | 0,2 |
| Huile de ricin hydrogéné | 1,2 |
| Trimontanate de glycéryle | 0,4 |
| Stabilisant(s) | 0,3 |

On a obtenu les résultats ci-dessous :

TABLEAU 6

| Stabilisant | | | | Temps en minutes | | | | | | | |
|---|---|---|---|---|---|---|---|---|---|---|---|
| N°code | Conc. | N° | Conc. | 0 | 3 | 6 | 9 | 12 | 15 | 18 | 21 |
| - | - | 4 | 0,3 | 1 | > 1 | 2 | 9 | 15 | 17 | - | - |
| L 28504 | 0,2 | 4 | 0,1 | 1 | > 1 | < 3 | > 7 | < 11 | 15 | - | - |
| L 28507 | 0,2 | 4 | 0,1 | 1 | > 1 | 4 | 9 | > 14 | 17 | - | - |
| L 28511 | 0,2 | 4 | 0,1 | 1 | > 1 | 2 | 6 | 7 | 8.5 | - | - |

| | | | | | | | | | | | |
|---|---|---|---|---|---|---|---|---|---|---|---|
| L 28512 | 0,2 | 4 | 0,1 | 1 | >1 | 3 | 6 | 8 | 10,5 | - | - |
| | | | | | | | | | | | |
| - | - | 4 | 0,3 | 1 | 1 | >1 | >3 | 10 | <12 | 17 | - |
| L 28513 | 0,2 | 4 | 0,1 | 1 | 1 | >2 | >3 | >7 | 10,5 | 14 | - |
| L 28597 | 0,2 | 4 | 0,1 | 1 | 1 | >2 | >3 | 7 | 9 | 14 | - |
| | | | | | | | | | | | |
| - | - | 5 | 0,3 | 1 | 1 | 1 | <3 | 10 | <12 | 15 | 17 |
| L 28504 | 0,2 | 5 | 0,1 | 1 | 1 | 1 | <3 | 6 | 7,5 | 10,5 | <14 |
| L 28507 | 0,2 | 5 | 0,1 | 1 | 1 | 1 | <3 | 6 | 8 | 11 | 15 |
| L 28511 | 0,2 | 5 | 0,1 | 1 | 1 | 1 | <3 | 6 | 7 | 11 | 14 |
| L 28512 | 0,2 | 5 | 0,1 | 1 | 1 | 1 | <3 | 6 | 8 | <11 | 14 |
| L 28588 | 0,2 | 5 | 0,1 | 1 | 1 | 1 | 3 | 6 | 8,5 | 11 | 14 |
| | | | | | | | | | | | |
| - | - | 5 | 0,3 | 1 | 1 | >1 | >2 | 10,5 | 14 | 17 | - |
| L 28513 | 0,2 | 5 | 0,1 | 1 | 1 | >1 | >2 | 6 | 11 | 14 | - |
| L 28590 | 0,2 | 5 | 0,1 | 1 | 1 | >1 | <3 | 10,5 | <13 | 16 | - |
| L 28597 | 0,2 | 5 | 0,1 | 1 | 1 | >1 | >2 | >6 | 10,5 | <14 | - |
| L28601 | 0,2 | 5 | 0,1 | 1 | 1 | >1 | 4 | 10 | 14 | 16 | - |
| | | | | | | | | | | | |
| - | - | 7 | 0,3 | 1 | >1 | 5 | >11 | 16 | 18 | brûlé | - |
| L 28504 | 0,2 | 7 | 0,1 | 1 | >1 | >3 | 7 | 9 | 14 | brûlé | - |
| L 28507 | 0,2 | 7 | 0,1 | 1 | 1 | 3 | 7 | <11 | 14 | brûlé | - |
| L 28511 | 0,2 | 7 | 0,1 | 1 | 1 | >2 | 8 | <10 | 14 | brûlé | - |
| L 28512 | 0,2 | 7 | 0,1 | 1 | 1 | >2 | 6 | 10 | 11 | 17 | - |
| L 28588 | 0,2 | 7 | 0,1 | 1 | 1 | 3 | 7 | <11 | 14 | 18 | - |
| | | | | | | | | | | | |
| - | - | 7 | 0,3 | 1 | >1 | 4 | 11 | 17 | 18 | - | - |
| L 28513 | 0,2 | 7 | 0,1 | 1 | >1 | 3 | 7 | 10,5 | 13 | - | - |
| L 28590 | 0,2 | 7 | 0,1 | 1 | >1 | 4 | 8 | 13 | 16 | - | - |
| L 28597 | 0,2 | 7 | 0,1 | 1 | >1 | 3 | >7 | 10,5 | <13 | - | - |
| L 28601 | 0,2 | 7 | 0,1 | 1 | >1 | <4 | 10 | 13 | 16 | - | - |
| | | | | | | | | | | | |
| - | - | 6 | 0,3 | 1 | >1 | 4 | <12 | 17 | brûlé | - | - |
| L 28504 | 0,2 | 6 | 0,1 | 1 | >1 | 3 | 7 | 10 | brûlé | - | - |
| L 28507 | 0,2 | 6 | 0,1 | 1 | 1 | >2 | 7 | 10,5 | brûlé | - | - |

| | | | | | | | | | | | |
|---|---|---|---|---|---|---|---|---|---|---|---|
| L 28511 | 0,2 | 6 | 0,1 | 1 | >1 | 3 | 7,5 | 10 | brûlé | - | - |
| L 28512 | 0,2 | 6 | 0,1 | 1 | 1 | 3 | 7,5 | >10 | 17 | - | - |

Ces résultats montrent clairement la supériorité des associations selon l'invention sur le β-aminocrotonate utilisé seul.

Conclusions :

L'ensemble des résultats ci-avant prouve de manière nette la parfaite compatibilité des composés de formule I et des β-aminocrotonates dans les résines vinyliques.

De plus, on sait maintenant que l'emploi des associations selon l'invention permet, tout en gardant une stabilisation équivalente, de diminuer la quantité globale de stabilisants dans la résine, ce qui se révèle intéressant à double titre :

- d'une part en diminuant le prix de revient de la stabilisation
- d'autre part en améliorant la qualité des produits finis obtenus (par exemple les emballages alimentaires qui polluent moins leur contenant).

Enfin, on a vu (Tableau 2) que pour les copolymères chlorure de vinyle-acétate de vinyle, il y avait synergie des pouvoirs stabilisants des différents constituants des associations selon l'invention.

B. Etude de la synergie du pouvoir stabilisant des composés de formule I et des β-aminocrotonates

Dans le chapitre A, on a déjà montré la supériorité des associations selon l'invention sur les β-aminocrotonates utilisés seuls pour toutes les résines et sur les composés de formule I utilisés seuls(pour les copolymères chlorure de vinyle-acétate de vinyle).

On a également découvert que les associations selon l'invention étaient pour le chlorure de polyvinyle à la fois supérieures aux aminocrotonates et aux composés de formule I utilisés seuls, et qu'il y avait donc synergie des pouvoirs stabilisants de chacun des constituants de l'invention pour ces résines également.

Cette synergie a été mise en évidence en étudiant la stabilité thermique dynamique de résines de chlorure de polyvinyle contenant comme stabilisant soit un composé de formule I, soit un β-aminocrotonate, soit une association des deux.

On a pour cela effectué l'essai suivant :

On verse la résine sur des cylindres dont la température est stabilisée à 210°Ç et on prélève à intervalle régulier de temps, jusqu'à dégradation totale de la résine ou collage sur les cylindres, des échantillons dont on évalue la coloration selon l'échelle GARDNER.

Cet essai permet de suivre l'évolution de la coloration d'une éprouvette soumise à une dégradation à la fois thermique et mécanique, ainsi que de suivre la décroissance de la stabilisation au cours de l'essai.

On a utilisé la résine ci-dessous :

| Ingrédients | Parties en poids |
|---|---|
| Chlorure de polyvinyle (SOLVIC 258 RD) | 100 |
| Résine acrylique | 8 |
| Huile de soja époxydée | 4 |
| Stéarate de calcium | 0,2 |
| Stéarate de zinc | 0,1 |
| Huile de ricin hydrogénée | 1,2 |
| Trimontanate de glycéryle | 0,4 |
| Stabilisant(s) | 0,3 |

On a obtenu les résultats ci-dessous :

TABLEAU 7 (voir page 19)

| Stabilisant | | | | Temps en minutes | | | | | | | | | | | |
|---|---|---|---|---|---|---|---|---|---|---|---|---|---|---|---|
| N° Code | Conc. | N° | Conc. | 2 | 3 | 4 | 5 | 6 | 7 | 8 | 9 | 10 | 12 | 14 | 16 |
| - | - | 4 | 0,3 | 3 | >3 | 4 | 8 | 9 | 9 | 10 | >10 | <11 | <13 | 15 | - |
| L 28504 | 0,3 | - | - | <3 | 3 | 4 | 6 | 8 | >8 | >9 | >10 | <13 | 16 | 18 | - |
| L 28504 | 0,2 | 4 | 0,1 | >2 | <3 | 3 | >4 | 5 | >6 | 7 | >8 | <9 | 10 | 12 | - |
| L 28507 | 0,3 | - | - | <3 | 3 | 5 | >6 | 8 | <9 | >9 | >10 | <13 | 16 | 18 | - |
| L 28507 | 0,2 | 4 | 0,1 | >2 | <3 | 3 | 4 | <5 | >6 | 7 | >8 | <9 | >10 | 15 | - |
| L 28591 | 0,3 | - | - | <3 | 3 | >4 | 6 | 8 | <9 | <10 | >10 | <13 | 16 | 18 | - |
| L 28591 | 0,2 | 4 | 0,1 | >2 | <3 | 3 | 4 | 5 | >6 | 7 | >8 | <9 | 10 | 12 | - |
| - | - | 4 | 0,3 | >2 | 3 | 5 | 5 | <9 | 9 | 9 | 10 | <11 | <12 | 13 | - |
| L 28511 | 0,3 | - | - | 3 | 3 | 4 | 6 | <7 | 7 | >7 | <9 | >11 | 13 | 16 | - |
| L 28511 | 0,2 | 4 | 0,1 | 3 | 3 | >3 | >3 | <4 | >4 | 6 | 7 | <9 | 9 | 11 | - |
| L 28512 | 0,3 | - | - | 3 | 4 | 4 | 5 | >5 | 7 | <9 | <10 | >11 | 14 | 16 | - |
| L 28512 | 0,2 | 4 | 0,1 | >2 | <3 | >3 | >3 | <5 | >5 | 6 | <7 | <9 | 9 | 11 | - |

| | | | | | | | | | | | | | | | |
|---|---|---|---|---|---|---|---|---|---|---|---|---|---|---|---|
| L 28513 | 0,3 | - | - | 3 | 3 | <5 | 5 | 6 | >8 | <9 | <10 | 11 | 16 | 17 | - |
| L 28513 | 0,2 | 4 | 0,1 | 3 | 3 | 3 | >3 | >4 | 5 | >6 | 8 | 9 | 9 | 11 | - |
| - | - | 4 | 0,3 | <3 | <4 | 4 | >6 | <9 | 9 | <10 | 10 | <11 | 12 | 16 | - |
| L 28509 | 0,3 | - | - | >2 | 3 | 3 | 4 | 5 | 7 | 8 | 9 | 10 | 13 | 17 | - |
| L 28509 | 0,2 | 4 | 0,1 | >2 | 3 | 3 | 4 | 5 | >6 | <9 | <10 | 10 | >11 | 17 | - |
| L 28597 | 0,3 | - | - | >2 | 3 | 3 | 4 | 5 | 7 | 9 | >10 | 12 | 16 | 17 | - |
| L 28597 | 0,2 | 4 | 0,1 | >2 | 3 | 3 | 3 | 4 | 5 | 7 | >9 | 10 | 12 | 16 | - |
| - | - | 5 | 0,3 | 3 | 3 | >3 | <4 | 5 | /8 | >8 | 9 | >9 | >10 | <11 | - |
| L 28504 | 0,3 | - | - | >2 | <3 | 3 | 4 | 5 | 8 | <9 | 9 | 10 | 11 | 16 | - |
| L 28504 | 0,2 | 5 | 0,1 | 2 | >2 | >2 | >2 | 3 | 4 | 5 | >5 | <7 | >8 | <10 | - |
| L 28511 | 0,3 | - | - | >2 | >2 | 3 | 4 | 5 | 8 | <9 | 9 | 10 | 11 | 16 | - |
| L 28511 | 0,2 | 5 | 0,1 | >2 | >2 | <3 | <3 | >3 | <5 | 6 | <7 | <9 | 9 | >10 | - |
| L 28513 | 0,3 | - | - | <3 | <3 | >3 | >4 | 5 | 7 | <9 | >9 | <10 | 11 | 15 | - |
| L 28513 | 0,2 | 5 | 0,1 | <3 | <3 | 3 | 4 | 5 | 6 | 7 | 8 | <9 | >9 | >10 | - |

| | | | | | | | | | | | | | | | |
|---|---|---|---|---|---|---|---|---|---|---|---|---|---|---|---|
| - | - | 5 | 0,3 | 2+ | 2+ | 2+ | 3 | 4 | 4 | <7 | 9 | 10+ | 10+ | 11 | - |
| L 28590 | 0,3 | - | - | 2+ | 2+ | 4+ | <7 | 7 | 8 | <9 | 10+ | 11- | 12+ | 14 | - |
| L 28590 | 0,2 | 5 | 0,1 | 2 | 2 | 2+ | 2+ | 3 | 3 | 4 | 6+ | 9- | 10+ | 10+ | - |
| L 28596 | 0,3 | - | - | 2+ | 3 | 4+ | 7 | 9- | 10- | 10- | 10+ | 11- | 11 | 13- | - |
| L 28596 | 0,2 | 5 | 0,1 | 2 | 2 | 2+ | 3 | 3 | 3 | 4+ | 4+ | 7- | 8+ | 9 | - |
| - | - | 5 | 0,3 | 2+ | 2+ | 3- | 3+ | 5 | 7- | 9- | 9 | 10- | 10+ | 12- | - |
| L 28541 | 0,3 | - | - | 3+ | 3+ | 3+ | 4 | 8 | 9- | 9 | 11- | 11- | 12- | 15 | - |
| L 28541 | 0,2 | 5 | 0,1 | 3 | 3+ | 4- | 4 | 4 | 6 | 7 | 8+ | 8+ | 10+ | 11 | - |
| - | - | 6 | 0,3 | 3- | 3- | 4 | 8+ | 9 | 10+ | 10+ | 11- | 11+ | 15+ | 18 | 18+ |
| L 28507 | 0,3 | - | - | 1+ | 2+ | 3+ | 5 | 7 | 8+ | 9 | 10+ | 11- | 13- | 17+ | 18 |
| L 28507 | 0,2 | 6 | 0,1 | 1+ | 2 | 2+ | 2+ | 3 | 7- | 8+ | 9 | 10 | 11- | 13- | 17+ |
| L 28511 | 0,3 | - | - | 2+ | 3- | 4 | 6 | 9- | 10- | 10 | 11- | 12 | 17+ | 17+ | 18 |
| L 28511 | 0,2 | 6 | 0,1 | 2+ | 2+ | 2+ | 2+ | 4- | 6+ | 8+ | 9 | 10- | 11- | 13- | 17 |

Le signe + indique que la coloration se situe entre l'unité inférieure et la demi-unité supérieure, ainsi 3+ signifie que la coloration se situe entre 3 et 3,5. De même, le signe - signifie que la coloration est comprise entre la demi-unité inférieure et l'unité supérieure. Par ailleurs, $>3$ signifie que la coloration est comprise entre 3 et 3+. Ces résultats montrent clairement la synergie du pouvoir stabilisant des composés de formule I et des β-aminocrotonates.

C. Etude de l'influence des associations selon l'invention sur le temps de collage

Les associations selon l'invention ont un effet particulièrement net sur l'allongement du temps de collage des copolymères du chlorure de vinyle, comparativement aux résines ne contenant pas l'association.

De plus, le temps de collage des résines stabilisées par l'association selon l'invention est comparable à celui des résines stabilisées uniquement par un composé de formule I.

Cet effet est très important car une diminution trop importante du temps de collage pourrait empêcher la transformation de la résine en produits finis.

On a réalisé l'essai ci-dessous :

La résine est malaxée puis calandrée sur cylindres maintenus à une température comprise entre 165 et 170°C et l'on note le temps qui s'écoule entre le début du calandrage de la résine et le début du collage sur les cylindres.

On a utilisé la résine ci-dessous :

| Ingrédients | Parties en poids |
|---|---|
| Chlorure de vinyle-Acétate de vinyle (SOLVIC 547 SA) | 80 |
| Chlorure de polyvinyle (LACQVYL S071 S) | 20 |
| Lubrifiant (IRGAWAX 280 de CIBA) | 0,1 |
| Stéarate de calcium | 0,5 |
| Stabilisant(s) | 0,3 |

On a obtenu les résultats ci-dessous :

TABLEAU 8

| Stabilisant | | | | Temps de collage (en minutes, secondes) |
|---|---|---|---|---|
| Code | Conc. | N° | Conc. | |
| L 28504 | 0,3 | - | - | 22 |
| L 28504 | 0,15 | 4 | 0,15 | 22,30 |
| L 28502 | 0,3 | - | - | 24,10 |
| L 28502 | 0,15 | 4 | 0,15 | 23 |
| L 28507 | 0,3 | - | - | 23,10 |
| L 28507 | 0,3 | 4 | 0,15 | 22,45 |
| L 28604 | 0,3 | - | - | 21,20 |
| L 28604 | 0,15 | 4 | 0,15 | 22 |
| L 28590 | 0,3 | - | - | 22,10 |
| L 28590 | 0,15 | 4 | 0,15 | 22,45 |
| L 28599 | 0,3 | - | - | 26 |
| L 28599 | 0,15 | 4 | 0,15 | 23,30 |
| L 28601 | 0,3 | - | - | 23,30 |
| L 28601 | 0,15 | 4 | 0,15 | 21,30 |

Ces résultats montrent que les associations selon l'invention ne modifient pas de manière nette les temps de collage.

Revendications de brevet

1. Nouvelle association stabilisante pour résines vinyliques constituées de polymères ou copolymères vinyliques caractérisée en ce qu'elle comprend un dérivé de dihydropyridine de formule générale :

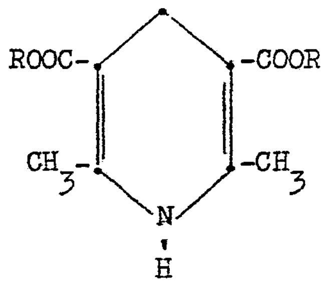

I

dans laquelle R représente un radical alkyle linéaire contenant de 1 à 22 atomes de carbone, un radical alkényle linéaire contenant de 3 à 18 atomes de carbone, un radical alkynyle linéaire contenant de 3 à 11 atomes de carbone ou un radical aralkyle, éventuellement substitué en position ortho ou para par un atome d'halogène ou par un radical méthyle ou méthoxy ou R représente un radical phényle, éventuellement substitué en position para par un radical méthoxy ou représente un radical $R_1-O-(CH_2)_n-$ dans lequel n prend la valeur 2, 3 ou 4 et $R_1$ représente un radical alkyle linéaire contenant de 1 à 4 atomes de carbone ou un radical phényle, et un dérivé β-aminocrotonique de formules générales :

$$CH_3-\underset{NH_2}{C}=CH-COOR_2 \qquad II$$

ou

$$CH_3-\underset{NH_2}{C}=CH-COOCH_2-(CH_2)_2-X-(CH_2)_2-O-\overset{O}{\overset{\|}{C}}-CH=\underset{NH_2}{C}-CH_3 \qquad III$$

dans lesquelles $R_2$ représente un radical alkyle linéaire comprenant de 1 à 8 atomes de carbone ou un mélange de radicaux alkyles linéaires contenant de 16 à 18 atomes de carbone et X représente une liaison ou un atome de soufre ou d'oxygène.

2. Nouvelle association selon la Revendication 1 caractérisée en ce que le dérivé β-aminocrotonique est choisi parmi le β-aminocrotonate de butanediol, le β-aminocrotonate de thiodiglycol, le β-aminocrotonate

de méthyle ou le β-aminocrotonate d'un mélange d'alcools contenant de 16 à 18 atomes de carbone.

3. Résines vinyliques constituées de polymères ou copolymères vinyliques caractérisées en ce qu'elles contiennent comme stabilisant une association selon la Revendication 1.

4. Résines vinyliques selon la Revendication 3 caractérisées en ce que la proportion de chacun des constituants de l'association au sein de la résine est telle que la quantité de dérivé de dihydropyridine est de 0,01 à 0,5 partie en poids par 100 parties de résine et la quantité de dérivé β-aminocrotonique est de 0,1 à 1,0 partie en poids par 100 parties de résine.

5. Résines vinyliques selon la Revendication 4 caractérisées en ce que la quantité de dihydropyridine est de 0,01 à 0,3 partie et la quantité de dérivé β-aminocrotonique est de 0,1 à 0,5 partie.

6. Résine vinylique selon l'une quelconque des Revendications 3 à 5 caractérisée en ce qu'elle est constituée de chlorure de polyvinyle.

7. Résine vinylique selon l'une quelconque des Revendications 3 à 5 caractérisée en ce qu'elle est constituée d'un copolymère chlorure de vinyle - acétate de vinyle.

8. Résine vinylique selon l'une quelconque des Revendications 3 à 5 caractérisée en ce qu'elle est constituée d'un copolymère chlorure de vinyle - chlorure de vinylidène.

9. Procédé de stabilisation à la chaleur de résines vinyliques constituées de polymères ou copolymères vinyliques caractérisé en ce que l'on introduit dans la résine de 0,3 à 0,5 partie en poids pour 100 parties de résine d'une association selon la Revendication 1.

10. Procédé de stabilisation à la chaleur de résines vinyliques constituées de polymères ou copolymères vinyliques caractérisé en ce que l'on introduit dans la résine une association selon la Revendication 1, la proportion de chacun des constituants de cette association au sein de la résine étant telle que la quantité de dérivé de dihydropyridine est de 0,01 à 0,5 partie en poids par 100 parties de résine et la quantité de dérivé β-aminocrotonique est de 0,1 à 1,0 partie en poids par 100 parties de résine.

11. Procédé selon la Revendication 10 caractérisé en ce que la quantité de dérivé de dihydropyridine est de 0,01 à 0,3 partie et la quantité

de dérivé β-aminocrotonique est de 0,1 à 0,5 partie.

12. Application des résines vinyliques selon la Revendication 3 à la fabrication d'articles commerciaux et industriels.

13. Application des résines vinyliques selon la Revendication 3 à la fabrication d'emballages alimentaires.

0049699

Office européen des brevets

# RAPPORT DE RECHERCHE EUROPEENNE

Numéro de la demande

EP 81 87 0039

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| AD | FR - A - 2 405 974 (LABAZ)<br>* Revendication *<br>-- | 1-13 | C 07 D 211/90<br>C 08 K 5/34<br>C 08 L 27/04 |
| A | EP - A - 0 002 007 (CIBA-GEIGY AG)<br>* Revendication *<br>-- | 1-13 | |
| A | US - A - 3 249 584 (G. DE GASPARIS)<br>* Revendication 1 *<br>------ | 1 | |
| | | | DOMAINES TECHNIQUES RECHERCHES (Int. Cl.³) |
| | | | C 07 D 211/90<br>C 08 K 5/00<br>5/17<br>5/34<br>C 08 L 27/02<br>27/04<br>27/06 |
| | | | CATEGORIE DES DOCUMENTS CITES<br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| X | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 05-01-1982 | HOFFMANN |

OEB Form 1503.1 06.78